# EUROPÄISCHE PATENTSCHRIFT

(11) **EP 3 803 253 B1**
(45) Veröffentlichungstag und Bekanntmachung des Hinweises auf die Patenterteilung: **31.07.2024**
(21) Anmeldenummer: 19726993.9
(22) Anmeldetag: 27.05.2019
(51) Int. Cl.: F41A 23/20, B60R 5/00, B60R 9/00, B60R 11/00, F41H 3/00, F41H 7/02, B60R 7/14

(54) **ZUSATZSYSTEMANORDNUNG FÜR EIN FAHRZEUG**
AUXILIARY SYSTEM ARRANGEMENT FOR A VEHICLE
DISPOSITIF DE SYSTÈME AUXILIAIRE POUR UN VÉHICULE

(30) Priorität: 08.06.2018 DE 202018103226 U
(43) Veröffentlichungstag der Anmeldung: 14.04.2021
(73) Patentinhaber: Rheinmetall Landsysteme GmbH, 29345 Südheide (DE)
(72) Erfinder: BAUMEIER, Andreas, 29345 Südheide (DE)
(74) Vertreter: Horn Kleimann Waitzhofer Schmid-Dreyer Patent- und Rechtsanwälte PartG mbB
(86) Internationale Anmeldenummer: PCT/EP2019/063623
(87) Internationale Veröffentlichungsnummer: WO 2019/233799

(56) Entgegenhaltungen:
- FR-A1- 2 390 702
- FR-A1- 3 052 550
- GB-A- 2 283 804
- JP-A- 2003 056 997
- US-A1- 2011 168 838

## Beschreibung

Die vorliegende Erfindung betrifft ein Fahrzeug mit mindestens einem Zusatzsystem, welches auf oder an dem Fahrzeug angeordnet ist.

Zusatzsysteme im erfindungsgemäßen Sinne sind Zusätze am Fahrzeug, um das Fahrzeug mit weiteren Funktionen auszustatten. Dazu zählen beispielsweise optische Systeme wie Kameras, objektive und lichterzeugende Systeme, akustische Systeme wie Antennensysteme, Abhörgeräte oder Lautsprecher, aber auch Waffensysteme wie Raketensysteme, Laserwaffen, sekundäre Waffensysteme, Softkill Applikationen und nicht-letale Waffensysteme. Weiterhin können elektromagnetische Systeme als Zusatzsystem im Sinne der vorliegenden Erfindung gelten, wie Detektoren.

Fahrzeuge, insbesondere Sicherheitsfahrzeuge sowie militärische und Gefechtsfahrzeuge sind bekanntermaßen mit verschiedenen Zusatzsystemen wie vorgenannt ausgerüstet. Die Zusatzsysteme sind am Fahrzeug angeordnet und sichtbar.

Dadurch, dass bei herkömmlichen Fahrzeugen die Zusatzsysteme außen am Fahrzeug angeordnet sind, birgt dies den Nachteil einer Signaturverschlechterung der Fahrzeuge sowie eine Beschädigungsanfälligkeit beim Passieren von unwegsamen Gelände oder Waldstücken. Weiterhin ist das Begehen des Fahrzeugs bei schlechten Lichtverhältnissen mit einer erhöhten Verletzungs- oder einer Stolpergefahr verbunden.

Um die Signatur eines Fahrzeugs zu verbessern, ist beispielsweise aus der WO 2013/050834 A1 bekannt, Hauptwaffen mit beweglichen Türen abzudecken sodass diese nicht mehr sichtbar sind. Dazu wird ein zweites Gehäuse durch die vorgenannten Türen über die Waffe gelegt, sodass diese nicht mehr sichtbar ist.

Die Türen vermögen es, durch die zusätzliche Hülle, die Art der Waffe zu verbergen nicht jedoch die Tatsache, dass eine Waffe vorhanden ist.

Ebenfalls ist aus der DE 277 306 A ein Geschütz für ein Schiff bekannt bei dem ein Deckel ein Geschütz in einem Panzerschacht abdecken kann. Auch hierbei ist jedoch der Panzerschacht des Geschützes weiterhin sichtbar.

Die FR 2 390 702 A1 zeigt ein gepanzertes Fahrzeug mit einem Raketengeschützturm, bei welchem Raketenwerfer an einer Luke befestigt sind.

Die GB 2 283 804 A beschreibt einen Rauchgrantenwerfer für gepanzerte Fahrzeuge, welcher an der Innenseite einer Luke montiert ist zur Einstellung eines vertikalen Abschusswinkels und welcher mit Hilfe eines Gelenks eine Drehbewegung in Azimutrichtung ausführen kann.

Die FR 3 052 550 A1 zeigt einen Raketenwerfer, welcher in einem vorhandenen Geschützturm eines gepanzerten Fahrzeugs eingehaust ist.

Bei der JP 2003-056997 A wird ein Raketenwerfer im Heckbereich eines Fahrzeugs in einem eigenen ausfahrbaren Gehäuse angeordnet. Aus dem Gehäuse heraus werden wiederum Sensoren ausgefahren.

Drohnen werden bei der US 2011/0168838 A1 aus einem externen Gehäuse gestartet, welches Gehäuse oberhalb eines vorhandenen Geschützturmes eines gepanzerten Fahrzeugs angeordnet ist.

Aufgabe der vorliegenden Erfindung besteht darin, die vorgenannten Zusatzsysteme derart am oder im Fahrzeug verbergen zu können, dass sie von außen nicht gesehen werden können und eine möglichst geringe Signaturverschlechterung des Fahrzeugs selbst verursachen.

Diese Aufgaben werden mit den Merkmalen des vorliegenden Hauptanspruchs gelöst.

So schlägt die vorliegende Erfindung ein Fahrzeug mit einem Chassis vor, mit mindestens einem Zusatzsystem, welches auf oder an dem Fahrzeug angeordnet ist. Das Fahrzeug kann in diesem Falle ein Land-, Wasser- oder Luftfahrzeug sein und es kann ein leichtes oder schweres Fahrzeug mit oder ohne Panzerung sein.

Weiterhin umfasst das erfindungsgemäße Fahrzeug mindestens eine bewegliche Wand und/oder Klappe, wobei das Zusatzsystem sowie die bewegliche Wand und/oder Klappe eine Einsatzposition und eine Tarnposition einnehmen kann. Die Bewegung von einer Position in die andere kann manuell geschehen oder automatisiert. Dazu kann beispielsweise das Zusatzsystem auf einer Schiene angeordnet sein. Auf dieser kann das Zusatzsystem beweglich von der Tarnposition in die Einsatzposition oder umgekehrt verfahren werden. Es sind aber auch hydraulische oder elektrische Verfahrungen aus den beiden Positionen denkbar.

In der Tarnposition wird das Zusatzsystem von der beweglichen Wand und/oder der Klappe vollständig verdeckt. Erfindungsgemäß weist in der Tarnposition die bewegliche Wand und/oder die Klappe lediglich die äußere Form des Fahrzeugs auf an der Stelle, an welcher die bewegliche Wand und/oder die Klappe angeordnet ist. Durch diese Anordnung der beweglichen Wand und/oder der Klappe wird die Kontur des Fahrzeugs nicht verändert, sodass das Fahrzeug in der Tarnposition eine durchgängig geschlossene Kontur aufweist. Durch die durchgängig geschlossene Kontur können die Zusatzsysteme von außen nicht gesehen werden und verursachen eine sehr geringe bis keine Signaturverschlechterung des Fahrzeugs.

Erfindungsgemäß kann das vorliegende Fahrzeug mit nur einem Zusatzsystem ausgestattet sein, was wie vorgenannt, ausgestaltet ist. Es können auch mehrere Zusatzsysteme unterschiedlicher Art vorgesehen sein. Zusätzlich zu den vorgenannten Zusatzsystemen sind auch Drohnen denkbar, die eine Einsatzposition außerhalb des Fahrzeugs einnehmen können.

Erfindungsgemäß ist für die Tarnposition der Zusatzsysteme mindestens ein Hohlraum im Fahrzeug vorgesehen, in welcher das Zusatzsystem in seiner Tarnposition Platz findet. Der Hohlraum wird dann in der Tarnposition von der beweglichen Wand und/oder der Klappe verschlossen.

Die Wand und/oder Klappe kann, wie das gesamte Fahrzeug auch mit Schutzelementen ausgestattet sein. So kann die bewegliche Wand und/oder die Klappe beispielsweise gepanzert sein oder bestimmte Lichtfilter aufweisen. Erfindungsgemäß ist der Hohlraum, welcher für die Aufnahme der Zusatzsysteme in Tarnposition zuständig ist, größer gestaltet als der Raum, den das Zusatzsystem einnimmt. Dieser nicht vereinnahmte Hohlraum steht dem Fahrzeug dann als Stauraum zur Verfügung.

Erfindungsgemäß besitzt das Fahrzeug einen Turm, welcher gegenüber dem Chassis drehbar gelagert ist. Die entsprechenden Zusatzsysteme sind mitsamt der beweglichen Wand und/oder der Klappe am Turm angebracht. Ebenso können Zusatzsysteme zudem am Chassis angeordnet sein.

Besonders bevorzugt sind die Zusatzsysteme lösbar befestigt, was den Vorteil bringt, dass in der Tarnposition die Zusatzgeräte ausgetauscht werden können. Dies kann aus dem Inneren des Fahrzeugs heraus geschehen, wenn das Fahrzeug einen entsprechenden Zugang zum Hohlraum aufweist, in welchem sich das Zusatzsystem befindet. Zum Austausch können weitere Zusatzsysteme im Fahrzeug mitgeführt werden oder die Zusatzsysteme werden aus zwei verschiedenen Hohlräumen getauscht. Dadurch kann das Fahrzeug individuell auf bestimmte Einsatzgebiete eingestellt werden.

Bei militärischen und/oder gepanzerten Fahrzeugen besitzen diese häufig eine Luke. In einer weiteren, besonderen Ausführungsform kann diese Luke als Klappe dienen und ebenfalls bereits ein Zusatzsystem verdecken.

Weitere Merkmale ergeben sich aus den beigefügten Zeichnungen. Es zeigen:
- Figur 1:: Perspektivische Darstellung eines Fahrzeugs mit Zusatzsystem in Tarnposition.
- Figur 2:: Perspektivische Darstellung eines Fahrzeugs mit Zusatzsystem in Einsatzposition.
- Figur 3:: Perspektivische Darstellung eines Fahrzeugs mit einer Drohne als Zusatzsystem.

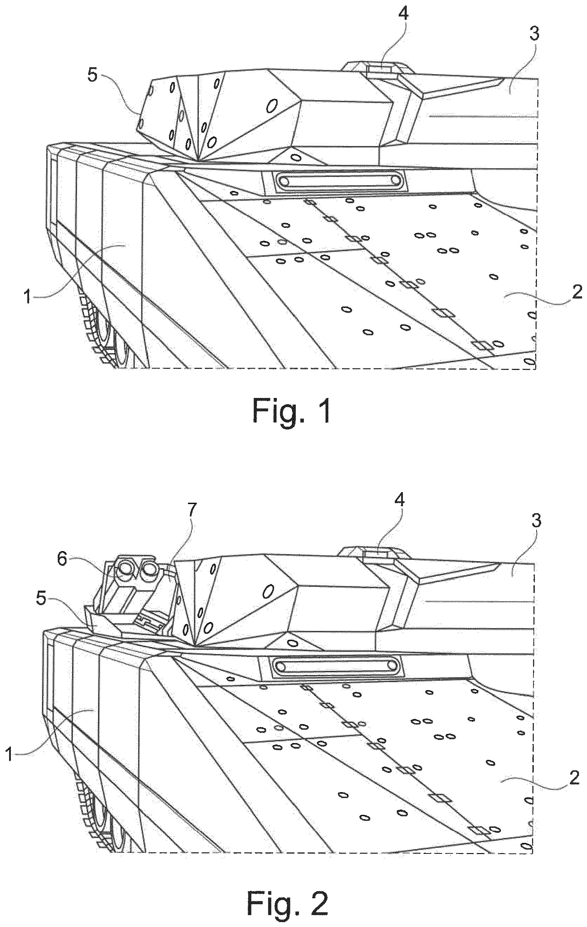

Figur 1 zeigt eine perspektivische Darstellung eines erfindungsgemäßen Fahrzeugs mit einem Chassis 1 und einem nicht sichtbaren Zusatzsystem, welches auf dem Fahrzeug angeordnet ist. Das Zusatzsystem ist nicht sichtbar, da es von einer Klappe 5 am Fahrzeug verdeckt ist.

Das vorliegende Fahrzeug besteht zusätzlich zum Chassis 1 aus einem Turm 3, welcher drehbar gegenüber dem Chassis 1 auf dem Fahrzeug gelagert ist.

Die Klappe 5 ist beweglich am Turm 3 angebracht und momentan in der Tarnposition gezeigt. Die Klappe 5 kann jedoch aus der Tarnposition in eine Einsatzposition verfahren werden, in dem sie sich bewegt und den dahinter liegenden Hohlraum mit dem Zusatzsystem freigibt.

Die Bewegung der Klappe 5 ist eine Drehbewegung. Die Klappe weist eine drehbewegliche Anlenkung auf, durch welche die Klappe 5 geklappt werden kann. Es sind aber auch andere Bewegungen der Klappe 5 möglich, wie beispielsweise Verschiebung oder Faltung. Das Gleiche gilt für eine bewegliche Wand.

Das Fahrzeug in Figur 1 ist als gepanzertes Fahrzeug ausgeführt und besitzt eine Luke 4. Auch die Luke 4 kann als Klappe 5 dienen und ein darunterliegendes Zusatzsystem beherbergen.

Die Klappe 5 ist derart gestaltet, dass es die Kontur des Turms 3 bzw. des gesamten Fahrzeugs in der Tarnposition nicht ändert. In der Tarnposition erscheint das Fahrzeug daher mit einer durchgängig geschlossenen Kontur, dadurch wird die Signatur des Fahrzeugs nicht verändert und es ist von außen nicht sichtbar, welches Zusatzsystem auf dem Fahrzeug mitgeführt wird. Entsprechend ist es für einen Angreifer oder eine äußere Einwirkung schwieriger, sich auf die Zusatzsysteme des Fahrzeugs einzustellen.

Statt einer Klappe 5 kann auch eine bewegliche Wand 2 verwendet werden, um ein Zusatzsystem zu verdecken. So könnte beispielsweise eine weitere Waffe unter der Wand 2 in Figur 1 verdeckt sein. Die Wand 2 sowie das darunterliegende Zusatzsystem kann dann aus der gezeigten Tarnposition in eine Einsatzposition bewegt werden.

Figur 2 zeigt die perspektivische Darstellung des Fahrzeugs aus Figur 1, jedoch mit den Zusatzsystemen 6 und der Klappe 5 in der Einsatzposition.

Gezeigt wird als Zusatzsystem 6 ein Waffensystem, welches an der Klappe 5 angeordnet ist. Klappe 5 klappt aus ihrer Tarnposition nach unten weg und gibt dadurch das an der Klappe 5 angeordnete Zusatzsystem frei sowie den Hohlraum 7, in welchem dazu das Zusatzsystem 6 in der Tarnposition angeordnet war und welcher vorher durch die Klappe 5 verdeckt war.

In seiner Einsatzposition ist das Zusatzsystem 6 voll funktionsfähig und auch sichtbar, im Gegensatz zu der Tarnposition, die es vorher eingenommen hat.

Das Waffensystem, welches durch die Wand 2 verdeckt ist, wird in Figur 2 immer noch in Tarnposition gezeigt. Es ist also möglich, verschiedene Zusatzsysteme 6 in unterschiedlichen Positionen verbringen zu lassen. So können einige Zusatzsysteme 6 in Einsatzposition sein, während andere sich noch in der Tarnposition befinden.

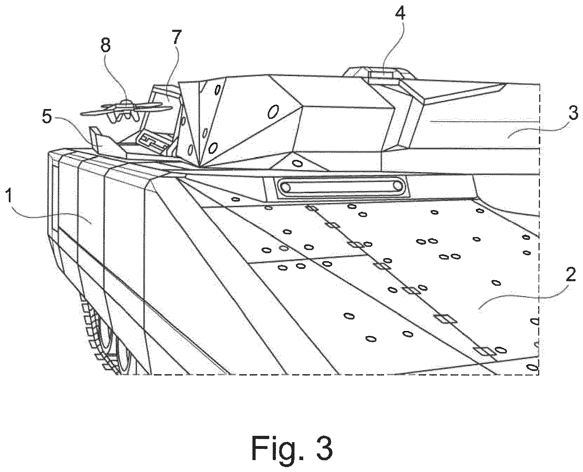

Figur 3 zeigt ein ähnliches Fahrzeug wie in den vorhergegangenen Zeichnungen, jedoch ist nun als Zusatzsystem eine Drohne 8 gezeigt. Im Gegensatz zur vorigen Figur ist die Drohne 8 nicht an einer Klappe 5 befestigt, sondern befindet sich in der Tarnposition im Hohlraum 7. Hierzu kann es beispielsweise durch Rastung befestigt werden. In der Einsatzposition, also bei herunter geklappter Klappe 5, ist der Hohlraum 7 nach außen geöffnet und die Drohne 8 kann sich in ihre Einsatzposition bewegen. Diese kann außerhalb des Fahrzeugs sein.

In der Figur 3 ist der Hohlraum 7 gezeigt, welcher größer gestaltet ist, als die Drohne 8 einnimmt. Der nicht vereinnahmte Raum im Hohlraum 7 kann deshalb in beiden Positionen als Stauraum verwendet werden.

Die Fahrzeuge in den vorgenannten Figuren sind jeweils mit Schutzelementen ausgestattet, in diesem Falle eine Panzerung. Entsprechende Schutzelemente können auch für die Klappe 5 oder die Wände 2 vorgesehen sein, um das Schutzniveau des Fahrzeugs aufrechtzuerhalten.

In allen Figuren ist der Hohlraum 7 von innerhalb des Fahrzeugs zugänglich, sodass die Zusatzsysteme 6 aus dem Inneren des Fahrzeugs gewartet werden können und/oder durch andere Zusatzsysteme ausgetauscht werden können. Zum Austausch der Zusatzsysteme ist es notwendig, dass diese lösbar befestigt sind. Eine lösbare Befestigung kann beispielsweise durch Verschrauben, Rast- oder Klemmverbindungen erwirkt werden.

### BEZUGSZEICHENLISTE

- 1: Chassis
- 2: Wand
- 3: Turm
- 4: Luke
- 5: Klappe
- 6: Zusatzsystem
- 7: Hohlraum
- 8: Drohne

## Patentansprüche

1. Fahrzeug mit einem Chassis (1),
mit mindestens einem Zusatzsystem (6), welches auf oder an dem Fahrzeug angeordnet ist,
wobei mindestens eine bewegliche Wand (2) und/oder Klappe (5) an dem Fahrzeug angeordnet ist,
wobei das Zusatzsystem (6) sowie die bewegliche Wand und/oder Klappe (5) eine Einsatzposition und eine Tarnposition einnehmen kann,
wobei das Zusatzsystem (6) in seiner Tarnposition von der beweglichen Wand (2) und/oder Klappe (5) vollständig verdeckt wird,
wobei in der Tarnposition das Fahrzeug durch die bewegliche Wand (2) und/oder Klappe (5) eine durchgängig geschlossene Kontur aufweist,
wobei das Zusatzsystem (6) in seiner Tarnposition in einem Hohlraum (7) Platz findet,
wobei der Hohlraum (7) von innerhalb des Fahrzeugs zugänglich ist, so dass das Zusatzsystem (6) aus dem Inneren des Fahrzeugs gewartet werden kann und/oder durch andere Zusatzsysteme (6) ausgetauscht werden kann,
wobei ein nicht durch das Zusatzsystem (6) vereinnahmter Raum des Hohlraums (7) als Stauraum zur Verfügung steht,
wobei das Fahrzeug einen Turm (3) aufweist, welcher gegenüber dem Chassis (1) drehbar gelagert ist, und
wobei das Zusatzsystem (6) auf oder an dem Turm (3) angeordnet ist.

2. Fahrzeug nach Anspruch 1, **dadurch gekennzeichnet, dass** das Zusatzsystem (6) aus einem Waffensystem besteht.

3. Fahrzeug nach Anspruch 1, **dadurch gekennzeichnet, dass** das Zusatzsystem (6) aus einer Drohne (8) besteht.

4. Fahrzeug nach Anspruch 1, **dadurch gekennzeichnet, dass** das Zusatzsystem (6) aus Detektoren besteht.

5. Fahrzeug nach Anspruch 1, **dadurch gekennzeichnet, dass** das Zusatzsystem (6) aus einem Abwehrsystem besteht.

6. Fahrzeug nach einem der Ansprüche 1 bis 5, **dadurch gekennzeichnet, dass** verschiedene Zusatzsysteme (6) am Fahrzeug angeordnet ist.

7. Fahrzeug nach einem der Ansprüche 1 bis 6, **dadurch gekennzeichnet, dass** das Zusatzsystem (6) an der beweglichen Wand (2) und/oder Klappe (5) lösbar angeordnet ist.

8. Fahrzeug nach einem der Ansprüche 1 bis 7, **dadurch gekennzeichnet, dass** das Zusatzsystem (6) in seiner Tarnposition in einem Hohlraum (7) angeordnet ist, welcher sich innerhalb des Fahrzeugs bzw. in der Fahrzeugkontur befindet.

9. Fahrzeug nach einem der Ansprüche 1 bis 8, **dadurch gekennzeichnet, dass** das Zusatzsystem (6) zwischen der Einsatzposition und der Tarnposition verfahrbar gestaltet sind.

10. Fahrzeug nach einem der Ansprüche 1 bis 9, **dadurch gekennzeichnet, dass** die Wand (2) und/oder Klappe (5) Schutzelemente aufweist.

11. Fahrzeug nach einem der Ansprüche 1 bis 10, **dadurch gekennzeichnet, dass** ein weiteres Zusatzsystem (6) mitsamt der beweglichen Wand und/oder Klappe auf oder an dem Chassis angeordnet ist.

12. Fahrzeug nach einem der Ansprüche 1 bis 11, **dadurch gekennzeichnet, dass** das Zusatzsystem (6) in seiner Tarnposition austauschbar gestaltet ist.

13. Fahrzeug nach einem der Ansprüche 1 bis 12, **dadurch gekennzeichnet, dass** eine Luke (4) am Fahrzeug vorgesehen ist, welche als Klappe (5) dient.

## Claims

1. A vehicle comprising a chassis (1);
with at least one add-on system (6) arranged on or at the vehicle;
wherein at least one movable wall (2) and/or flap (5) is arranged at the vehicle;
wherein the add-on system (6) and the movable wall (2) and/or flap (5) takes up a use position and a concealed position;
wherein the add-on system (6) in its concealed position is completely covered by the movable wall (2) and/or flap (5);
wherein, in the concealed position, the vehicle has a continuously closed contour via the movable wall (2) and/or the flap (5);
wherein, in the concealed position, the add-on system (6) is arranged inside a cavity (7);
wherein the cavity (7) is accessible from within the vehicle, and therefore the add-on system (6) can be maintained and/or exchanged by other add-on systems (6) from the interior of the vehicle;
wherein a space not appropriated by the add-on system (6) is available as a storage space;
wherein the vehicle has a turret (3) which is mounted rotatably in relation to the chassis (1); and
wherein the add-on system (6) is arranged on or at the turret (3).

2. The vehicle according to claim 1, **characterized in that** the add-on system (6) comprises a weapon system.

3. The vehicle according to claim 1, **characterized in that** the add-on system (6) comprises a drone (8).

4. The vehicle according to claim 1, **characterized in that** the add-on system (6) comprises a detector.

5. The vehicle according to claim 1, **characterized in that** the add-on system (6) comprises a defense system.

6. The vehicle according to one of claims 1 to 5, **characterized in that** various add-on systems (6) are arranged on the vehicle.

7. The vehicle according to one of claims 1 to 6, **characterized in that** the add-on system (6) is arranged releasably at the movable wall (2) and/or flap (5).

8. The vehicle according to one of claims 1 to 7, **characterized in that** the add-on system (6) in its concealed position is arranged in at least one cavity (7) which is located within the vehicle or in the vehicle contour.

9. The vehicle according to one of claims 1 to 8, **characterized in that** the add-on system (6) is configured to be movable between the use position and the concealed position.

10. The vehicle according to one of claims 1 to 9, **characterized in that** the wall (2) and/or flap (5) have protective elements.

11. The vehicle according to one of claims 1 to 10, **characterized in that** another add-on system (6) is attached together with the movable wall (2) and/or flap (5) on or at the chassis (1).

12. The vehicle according to one of claims 1 to 11, **characterized in that** the add-on system (6) is configured to be interchangeable in its concealed position.

13. The vehicle according to one of claims 1 to 12, **characterized in that** a hatch (4), which serves as a flap (5), is provided at the vehicle.

## Revendications

1. Véhicule comprenant un châssis (1) ;
doté d'au moins un système additionnel (6) disposé sur le véhicule ou au niveau de ce dernier ;
dans lequel au moins une paroi mobile (2) et/ou un volet (5) sont disposés au niveau du véhicule ;
dans lequel le système additionnel (6) et la paroi mobile (2) et/ou le volet (5) prennent une position d'utilisation et une position dissimulée ;
dans lequel le système additionnel (6), dans sa position dissimulée, est complètement recouvert par la paroi mobile (2) et/ou le volet (5) ;
dans lequel, dans la position dissimulée, le véhicule a un contour fermé en continu par le biais de la paroi mobile (2) et/ou du volet (5) ;
dans lequel, dans la position dissimulée, le système additionnel (6) est disposé à l'intérieur d'une cavité (7) ;
dans lequel la cavité (7) est accessible depuis l'intérieur du véhicule, et le système additionnel (6) peut ainsi être maintenu et/ou remplacé par d'autres systèmes additionnels (6) depuis l'intérieur du véhicule ;
dans lequel un espace non approprié par le système additionnel (6) est disponible en tant qu'espace de stockage ;
dans lequel le véhicule comporte une tourelle (3) qui est montée mobile en rotation par rapport au châssis (1) ; et
dans lequel le système additionnel (6) est disposé sur la tourelle (3) ou au niveau de cette dernière.

2. Véhicule selon la revendication 1, **caractérisé en ce que** le système additionnel (6) comprend un système d'arme.

3. Véhicule selon la revendication 1, **caractérisé en ce que** le système additionnel (6) comprend un drone (8).

4. Véhicule selon la revendication 1, **caractérisé en ce que** le système additionnel (6) comprend un détecteur.

5. Véhicule selon la revendication 1, **caractérisé en ce que** le système additionnel (6) comprend un système de défense.

6. Véhicule selon l'une des revendications 1 à 5, **caractérisé en ce que** divers systèmes additionnels (6) sont disposés sur le véhicule.

7. Véhicule selon l'une des revendications 1 à 6, **caractérisé en ce que** le système additionnel (6) est disposé de manière libérale au niveau de la paroi mobile (2) et/ou du volet (5).

8. Véhicule selon l'une des revendications 1 à 7, **caractérisé en ce que** le système additionnel (6), dans sa position dissimulée, est disposé dans au moins une cavité (7) qui est située à l'intérieur du véhicule ou dans le contour de véhicule.

9. Véhicule selon l'une des revendications 1 à 8, **caractérisé en ce que** le système additionnel (6) est conçu pour être mobile entre la position d'utilisation et la position dissimulée.

10. Véhicule selon l'une des revendications 1 à 9, **caractérisé en ce que** la paroi (2) et/ou le volet (5) comportent des éléments de protection.

11. Véhicule selon l'une des revendications 1 à 10, **caractérisé en ce que** un autre système additionnel (6) est fixé conjointement avec la paroi mobile (2) et/ou le volet (5) sur le châssis (1) ou au niveau de ce dernier.

12. Véhicule selon l'une des revendications 1 à 11, **caractérisé en ce que** le système additionnel (6) est conçu pour être interchangeable dans sa position dissimulée.

13. Véhicule selon l'une des revendications 1 à 12, **caractérisé en ce que** une trappe (4), qui sert de volet (5), est prévue sur le véhicule.
